# EUROPÄISCHE PATENTSCHRIFT

(11) **EP 0 893 306 B1**
(45) Veröffentlichungstag und Bekanntmachung des Hinweises auf die Patenterteilung: **13.11.2002**
(21) Anmeldenummer: 98110382.3
(22) Anmeldetag: 06.06.1998
(51) Int. Cl.: B60R 5/04, B60R 5/00

(54) **Kofferraum-Einrichtung für den Einbau in Kraftfahrzeuge, insbesondere für den sitzlehnenseitigen Einbau in Personenkraftwagen**
Boot arrangement for installation in motor vehicles, in particular for the seat back of a motor car
Agencement de coffre destiné à être monté dans des véhicules automobiles, en particulier pour être aménagé dans le dossier du siège d'un tel véhicule

(30) Priorität: 27.06.1997 DE 19727499
(43) Veröffentlichungstag der Anmeldung: 27.01.1999
(73) Patentinhaber: PETER BUTZ GmbH & Co Verwaltungs-KG, 40764 Langenfeld (DE)
(72) Erfinder: Sitzler, Wolfgang, 42111 Wuppertal (DE); Ledüc, Peter, 40468 Düsseldorf (DE)
(74) Vertreter: Patentanwälte Ostriga & Sonnet

(56) Entgegenhaltungen:
- CH-A- 438 052
- DE-A- 3 447 323
- DE-A- 3 625 666
- DE-A- 3 738 931
- DE-A- 4 106 973
- US-A- 5 628 543

## Beschreibung

Die Erfindung betrifft eine Transportbehälter-Einrichtung entsprechend dem Oberbegriff des Anspruchs 1. Eine solche Transportbehälter-Einrichtung, und zwar eine Skisack-Einrichtung, ist durch die DE 34 47 323 C2 bekanntgeworden.

Gemäß der DE 34 47 323 C2 ist eine Befestigungsanordnung in Form eines Befestigungsrahmens vorgesehen, welcher materialmäßig einstückig angeschlossene Verriegelungszungen sowie Rastwiderlager aufweist. Mit diesen Rastwiderlagern wird der Befestigungsrahmen in eine Aussparung der Fondwand eingesetzt und sodann bis zum Einschnappen der Verriegelungszungen in eine Fondwand- bzw. Kofferraumwand-Aussparung hineingedrückt. Auf diese Weise ist eine schnelle und werkzeuglos vorzunehmende Anbringung des Befestigungsrahmens möglich. Auch die Demontage kann werkzeuglos durch unmittelbare Betätigung der Verriegelungszungen geschehen, welche indessen keine gesonderten Betätigungshandhaben aufweisen (vgl. DE 34 47 323 C2 Fig. 1).

Zur Befestigung des Mündungsbereichs eines Skisacks weist der Befestigungsrahmen der bekannten Transportbehälter-Einrichtung gemäß der DE 34 47 323 C2 eine Anlage-Haltefläche in einer Nut auf, in welche ein Halterahmen, und zwar ein Steckrahmen, zur Halterung des Skisack-Mündungsbereichs eingesetzt werden kann. Skisack-Mündungsbereich und Halterahmen bilden somit eine an der Anlage-Haltefläche des Befestigungsrahmens anliegende Gegenanlage-Haltefläche.

Ausgehend von der DE 34 47 323 C2, liegt dieser Erfindung die Aufgabe zugrunde, die bekannte Transportbehälter-Einrichtung so weiterzuentwickeln, daß diese wesentlich universeller als bisher anwendbar ist.

Entsprechend der Erfindung wird diese Aufgabe dadurch gelöst, daß der Befestigungsfrahmen zwei im Abstand voneinander angeordnete, in einander entgegengesetzte Richtungen weisende Anlage-Halteflächen, nämlich eine erste und eine zweite Anlage-Haltefläche, bildet, an welche jeweils oder alternativ eine Gegenanlage-Haltefläche eines Halterahmens anlegbar ist, und daß zur lösbaren Festlegung des Halterahmens an der jeweiligen Anlage-Haltefläche jeder Anlage-Haltefläche mindestens ein Riegel zugeordnet ist.

Wesentlich für die erfindungsgemäße Transportbehälter-Einrichtung ist zunächst der fahrzeugseitig anzubringende Befestigungsrahmen. Diese bildet zwei im Abstand voneinander angeordnete, in einander entgegengesetzte Richtungen weisende Anlage-Halteflächen, nämlich eine erste und zweite Anlage-Haltefläche.

Angewendet auf das Beispiel einer PKW-Limousine, könnte demnach bei einem sitzlehnen- oder kofferraumwandseitigen Einbau des Befestigungsrahmens z.B. die erste Anlage-Haltefläche in Fahrtrichtung nach vorn, also in den Fahrgastraum hinein, und die zweite Anlage-Haltefläche nach hinten, also in den Kofferraum hinein, weisen.

Hierdurch hat die Erfindung die Möglichkeit geschaffen, z.B. einen Transportbehälter mit der Gegenanlage-Haltefläche seines Halterahmens vom Kofferraum her an die rückwärts weisende zweite Anlage-Haltefläche zu fügen und dort mittels mindestens eines Riegels lösbar zu befestigen. Ein solcher kofferraumseitig montierter Behälter, z.B. eine Kühlbox, könnte sodann mittels einer eigens vorgesehenen Klappe über die sitzlehnenseitige und/oder kofferraumwandseitige Durchladeöffnung zugänglich sein.

Andererseits eröffnet die Erfindung die Möglichkeit, die halterahmenseitige Gegenanlage-Haltefläche eines Behälters vom Fahrgastraum her an die nach vorn weisende erste Anlage-Haltefläche zu fügen und dort mittels mindestens eines Riegels zu sichern. Ein solcher Behälter könnte beispielsweise Utensilien eines transportablen Büros, wie z.B. ein Faxgerät, eine Telefonanlage, ein Laptop od. dgl., aufnehmen. Die zum Kofferraum führende Durchladeöffnung kann bei einem derartigen Transportbehälter ebenfalls genutzt werden und sei es nur zur Durchführung elektrischer Leitungen. Selbstverständlich sind auch Transportbehälter denkbar, die keine Nutzung der Durchladeöffnung erfordern.

Schließlich gestattet die Erfindung ebenfalls die Möglichkeit, sowohl fahrgastraumseitig als auch kofferraumseitig je einen Transportbehälter mittels des erfindungsgemäßen Befestigungsrahmens lösbar zu sichern.

Unter dem Begriff "Transportbehälter" soll im Sinne der Erfindung jedes geeignete Behältnis verstanden werden, sei es gänzlich geschlossen oder sei es teilweise offen, sei es mit festen Wänden oder sei es flexiblen Wänden versehen.

Eine bevorzugte erfindungsgemäße Ausführungsform besteht darin, daß der Befestigungsrahmen mindestens zwei im Parallelabstand voneinander angeordnete hohlprofilartige Bauteile aufweist, deren Querschnittsprofil im wesentlichen U-förmig ist und deren durch einen Profilboden miteinander verbundene Profilstege mit ihren Außenflächen die erste und die zweite Anlage-Haltefläche bilden. Zweckmäßig weist die Profilöffnung des jeweiligen hohlprofilartigen Bauteils nach außen.

Eine vorteilhafte Erfindungsvariante besteht darin, daß die beiden hohlprofilartigen Bauteile durch zwei sich jeweils rechtwinklig zu ihnen erstreckende Verbindungsstreben zu einem geschlossenen Befestigungsrahmen miteinander verbunden sind. Weiterhin sieht die Erfindung vor, daß die beiden hohlprofilartigen Bauteile fahrzeugseitig im wesentlichen horizontal angebracht sind.

Zweckmäßig ist der jeweilige Riegel mittels mindestens einer Betätigungshandhabe zu betätigen. In diesem Zusammenhang sieht die Erfindung zunächst vor, daß der Riegel ein Schwenkriegel oder ein Schieberiegel ist, welcher den an der Anlage-Haltefläche anliegenden Halterahmen an einer Stelle hintergreift, die der Gegenanlage-Haltefläche des Halterahmens abgewandt ist.

Gemäß einer anderen Erfindungsvariante ist der Riegel von einer federnden Rastnase gebildet, welche Bestandteil eines Blattfederelements sein kann.

Die Rastnase ist in ihrer den Halterahmen hintergreifenden Sperrstellung lösbar zu blockieren.

Zur Betätigung der Riegel sieht die Erfindung zunächst vor, daß jedem Riegel eine Betätigungshandhabe zugeordnet ist.

Dabei kann die Betätigungshandhabe für den jeweiligen Riegel auf der Seite angeordnet sein, auf welcher sich auch die dem Riegel zugeordnete Anlage-Haltefläche der Befestigungsanordnung befindet. Wenn also ein Transportbehälter vom Fahrgastraum her montiert ist, kann gemäß den vorbeschriebenen Erfindungsmerkmalen die Betätigungshandhabe vom Fahrgastraum her bedient werden.

Für andere Anwendungsfälle hält die Erfindung eine Ausführungsform bereit, wonach die Betätigungshandhaben für beide Riegel auf derselben Seite des Befestigungsrahmens vorgesehen sind. Dies bedeutet, daß die Betätigung für den Riegel der ersten Anlage-Haltefläche und die Betätigung des Riegels für die zweite Anlage-Haltefläche von derselben Seite her, also z.B. vom Fahrgastraum oder vom Kofferraum her, erfolgt.

Zweckmäßig ist es weiterhin, die beiden Riegel jeweils zu einer Baugruppe zusammenzufassen.

Die Erfindung sieht nicht zwingend vor, daß mit Betätigungshandhaben versehene Riegel beispielsweise an zwei gegenüberliegenden Seiten, z.B. eines geschlossenen Befestigungsrahmens, vorgesehen sind. Die Erfindung kann auch dann realisiert werden, wenn z.B. die untere Seite des Befestigungsrahmens formschlüssig gehalten wird, z.B. mit einer eine Schwenkbewegung gestattenden Steckbefestigung. In diesem Fall wird es genügen, mindestens einen Riegel an der oberen Seite des Befestigungsrahmens vorzusehen.

Eine besonders einfach zu handhabende erfindungsgemäße Ausführungsform besteht darin, daß an einer Seite des Befestigungsrahmens, z.B. oben, mindestens ein Riegel angeordnet ist, und daß an der gegenüberliegenden Seite des Befestigungsrahmens, Seite des Befestigungsrahmens z.B. unten, ebenfalls mindestens ein Riegel angeordnet ist, daß an einer Seite der Befestigungsanordnung, z.B. oben, mindestens eine Betätigungshandhabe für mindestens einen Riegel angeordnet ist, und daß die an der diametral gegenüberliegenden Seite des Befestigungsrahmens vorgesehenen Riegel miteinander bewegungsgekuppelt sind.

Wenn also eine z.B. oben an einem Befestigungsrahmen vorgesehene Betätigungshandhabe im Lösesinne der ihr zugeordneten Riegel bedient wird, werden über eine Bewegungskupplung, z.B. über einen Bowdenzug oder über ein Gestänge, zugleich die an der unteren Seite des Befestigungsrahmens angeordneten Riegel ebenfalls im Lösesinne bedient.

In den Zeichnungen sind bevorzugte Ausführungsbeispiele entsprechend der Erfindung näher dargestellt, es zeigt
Fig. 1 eine mehr schematische Schnittansicht durch eine Personenkraftwagen-Fondsitzlehne mit einer Transportbehälter-Einrichtung; dabei ist die Sitzlehne aus Gründen der zeichnerischen Darstellung nicht in einer geneigten, sondern in einer vertikalen Position gezeigt,
Fig. 2 eine vergrößerte Detaildarstellung des oberen Bereichs der Darstellung gemäß Fig. 1,
Fig. 3 eine vergrößerte Detaildarstellung des unteren Bereichs der Darstellung gemäß Fig. 1,
Fig. 4 - 7 in Anlehnung an die Darstellung gemäß Fig. 2 unterschiedliche Anwendungen bzw. Ausführungsformen,
Fig. 8 und 9 in Anlehnung an die Darstellung gemäß Fig. 3 abgewandelte Anwendungs- bzw. Ausführungsformen,
Fig. 10 in Anlehnung an die Darstellungsweise gemäß Fig. 2 eine andere abgewandelte Ausführungsform,
Fig. 11 eine Zusatzbefestigung für besondere Anwendungsfälle,
Fig. 12 in Anlehnung an Fig. 1 eine Gesamtdarstellung einer abgewandelten Ausführungsform,
Fig. 13 eine vergrößerte Detaildarstellung des oberen Bereichs der Fig. 12 und
Fig. 14 eine vergrößerte Detaildarstellung des unteren Bereichs der Fig. 12.

In den Zeichnungen ist eine Transportbehälter-Einrichtung unabhängig von ihrer jeweiligen Ausführungsform stets mit der Bezugsziffer 10 bezeichnete.

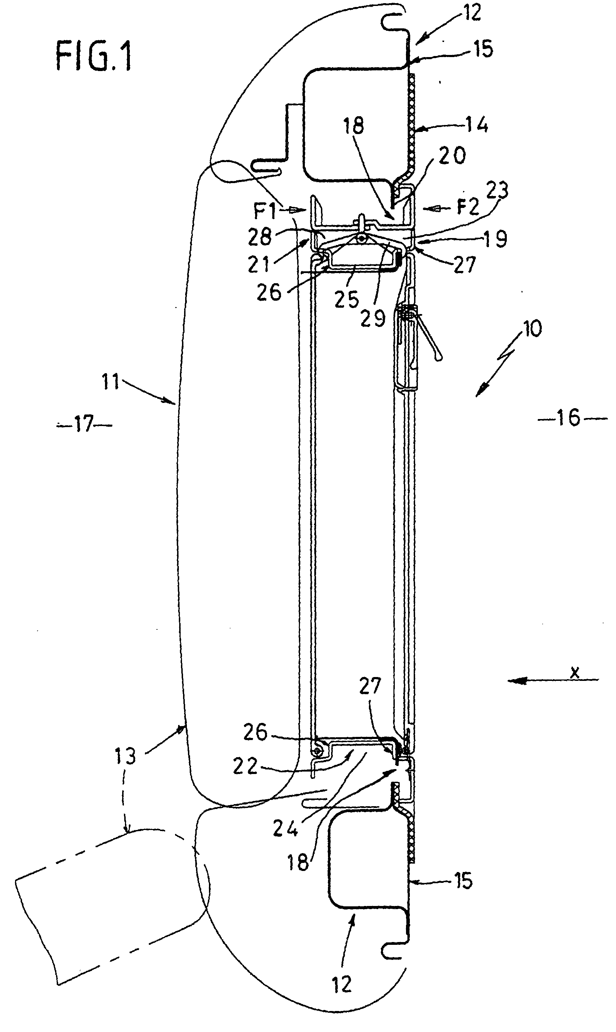

Gemäß Fig. 1 ist eine Transportbehälter-Einrichtung 10 in die Fond-Sitzlehne 11 einer Personenkraftwagen-Limousine eingebaut und dabei bezüglich der Fahrtrichtung x hinter einer schwenkbaren Armlehne 13 angeordnet, deren Ruheposition in durchgezogener Darstellung und deren ausgeschwenkte Betriebsposition gemäß Fig. 1 in gestrichelter Darstellung zu sehen ist.

Ein aus Stahl-Preßprofilen bestehendes Sitzlehnengestell 12 bildet zugleich die mit einer Verkleidung 14 versehene Kofferraumwand 15. Demnach hat man sich den Kofferraum bei 16 und den Fahrgastraum bei 17 vorzustellen.

In die Kofferraumwand 15 ist eine Aussparung 18 zur Aufnahme eines Befestigungsrahmens 19 der Transportbehälter-Einrichtung 10 eingebracht. Der Befestigungsrahmen 19, ein Kunststoff-Spritzgußteil z.B., ist in nicht näher dargestellter Weise am Rand 20 der Aussparung 18 befestigt, insbesondere schraubbefestigt.

Der Befestigungsrahmen 19 weist ein oberes und ein unteres hohlprofilartiges Bauteil 21, 22 auf. Die hohlprofilartigen Bauteile 21, 22 sind U-förmig profiliert und weisen mit ihrer jeweiligen Profilöffnung 23, 24 nach außen, d.h. nach oben und nach unten.

Jedes hohlprofilartige Bauteil 21, 22 weist einen Profilboden 25 und etwa treppenartig nach außen abgewinkelte Profilstege 26, 27 auf.

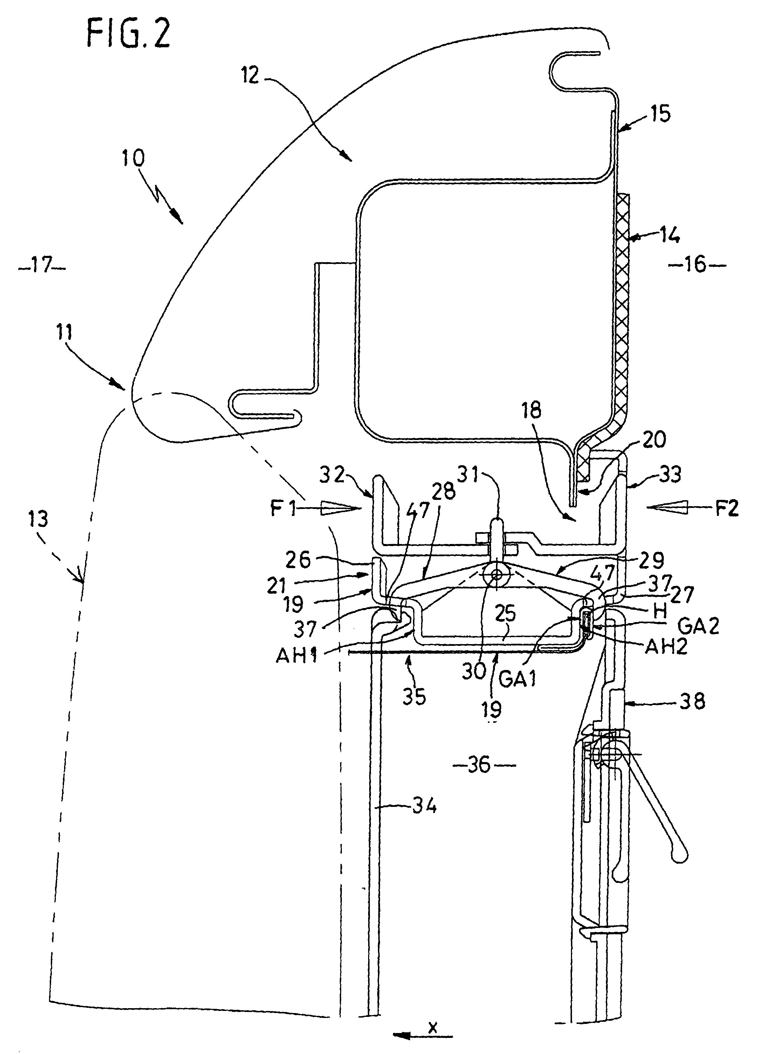

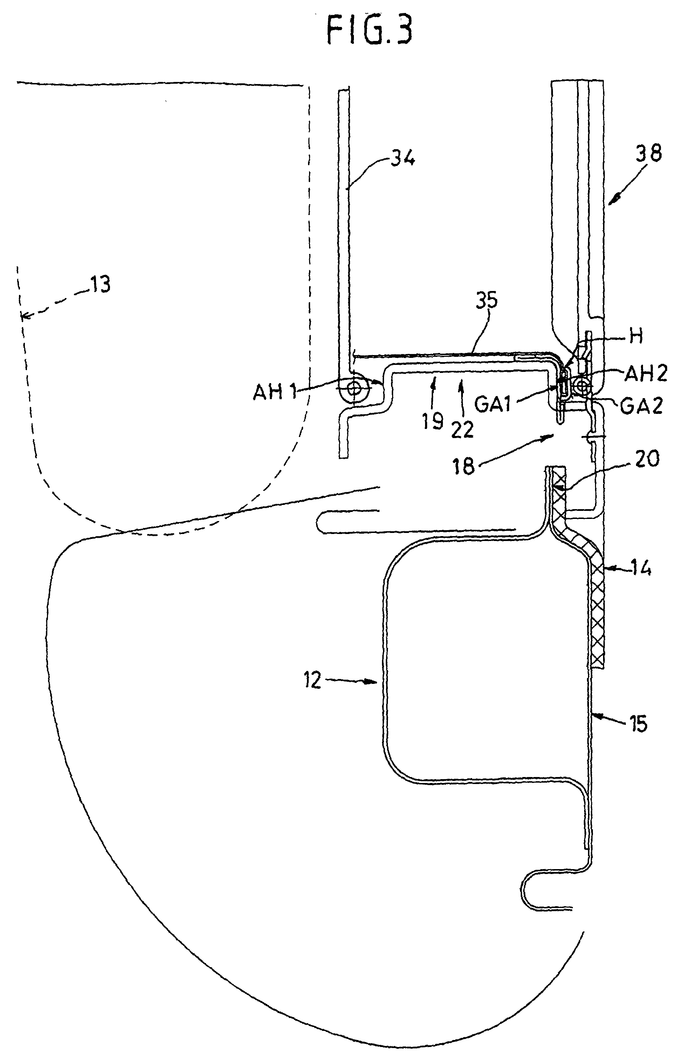

Wie beispielsweise in den Fig. 2 und 3 zu erkennen, bilden die Profilstege 26, 27 Anlage-Halteflächen AH1 und AH2, die in einander entgegengesetzte Richtungen weisen. Und zwar weist die erste Anlage-Haltefläche AH1 zum Fahrgastraum 17, während die zweite Anlage-Haltefläche AH2 zum Kofferraum 16 gerichtet ist.

In den Fig. 1 und 3 ist dargestellt, daß ein Halterahmen H mit einer vorderen Gegenanlage-Haltefläche GA1 an der rückwärtigen Anlage-Haltefläche AH2 des Befestigungsrahmens 19 anliegt.

Grundsätzlich wäre auch denkbar, daß der Halterahmen H mit seiner zweiten, rückwärtigen Gegenanlage-Haltefläche GA2 an der vorderen Anlage-Haltefläche AH1 anliegt und dort vom Riegelansatz 37 eines Schwenkriegels 28 so hintergriffen ist, daß letzterer mit seiner Riegelfläche die vordere Gegenanlage-Haltefläche GA1 hintergreift.

Immer zwei Schwenkriegel 28, 29 sind zu einer Baugruppe zusammengefaßt und auf einer gemeinsamen Lagerachse 30 innerhalb des hohlprofilartigen Bauteils 21 schwenkbar gelagert. Die Lagerachse 30 ist mittels mindestens einer Konsole 61 am Bauteil 21 bzw. 22 befestigt. Beide Schwenkriegel 28, 29 sind als Doppelhebel ausgebildet, die zu ihrer Betätigung jeweils einen relativ kurzen Hebelfortsatz 31 aufweisen. Jeder Hebelfortsatz 31 ist von einer gesonderten Betätigungshandhabe 32, 33 umgriffen. Wenn die Betätigungshandhabe 32 in Richtung F1 gedrückt wird, greift die Betätigungshandhabe 32 an den Hebelfortsatz 31 des Schwenkriegels 28 an und hebt diesen aus seiner Verriegelungsstellung nach oben und gibt in diesem Falle eine Schwenkklappe 34 frei, die der Handhabung eines textilen Skisacks 35 dient, wenn sich dieser noch in einem Stauraum 36 befindet. Der vorbeschriebene Halterahmen H dient also in diesem Falle der lösbaren Befestigung des textilen Skisacks 35 am Befestigungsrahmen 19.

Wenn man die hintere Betätigungshandhabe 33 in Druckrichtung F2 betätigt, schwenkt der Hebelfortsatz 31 des Schwenkriegels 29 nach links, so daß sich der Riegelansatz 37 des Schwenkriegels 29 in seine nicht dargestellte Lösestellung nach oben bewegt und den Halterahmen H samt Skisack 35 freigibt. Skisack 35 mit Halterahmen H können sodann vom Kofferraum 16 her entnommen werden, wenn man die hintere Schwenkklappe 38 öffnet.

Fig. 3 soll nur zeigen, wie der Halterahmen H am unteren Bereich der Anordnung anliegt.

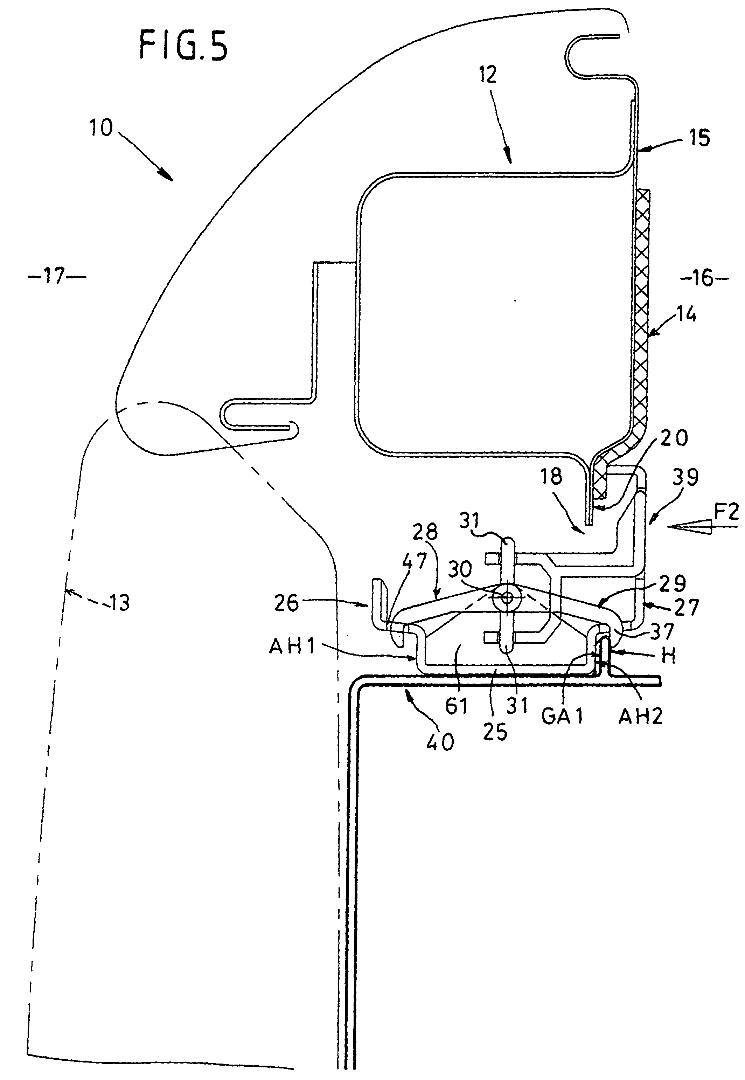

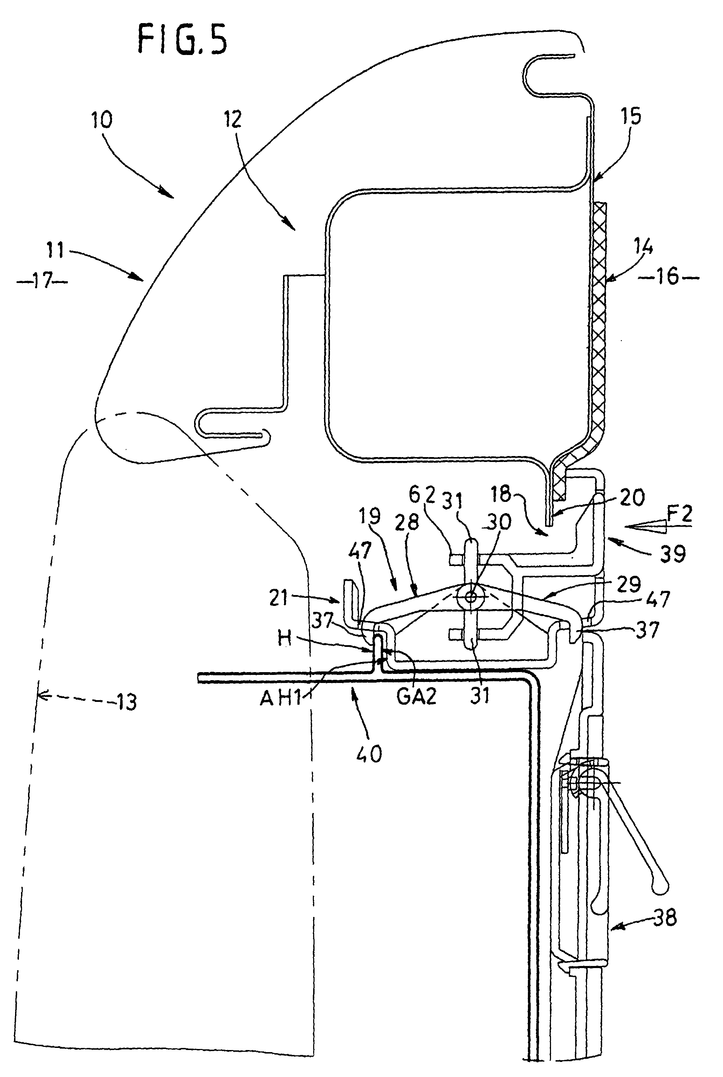

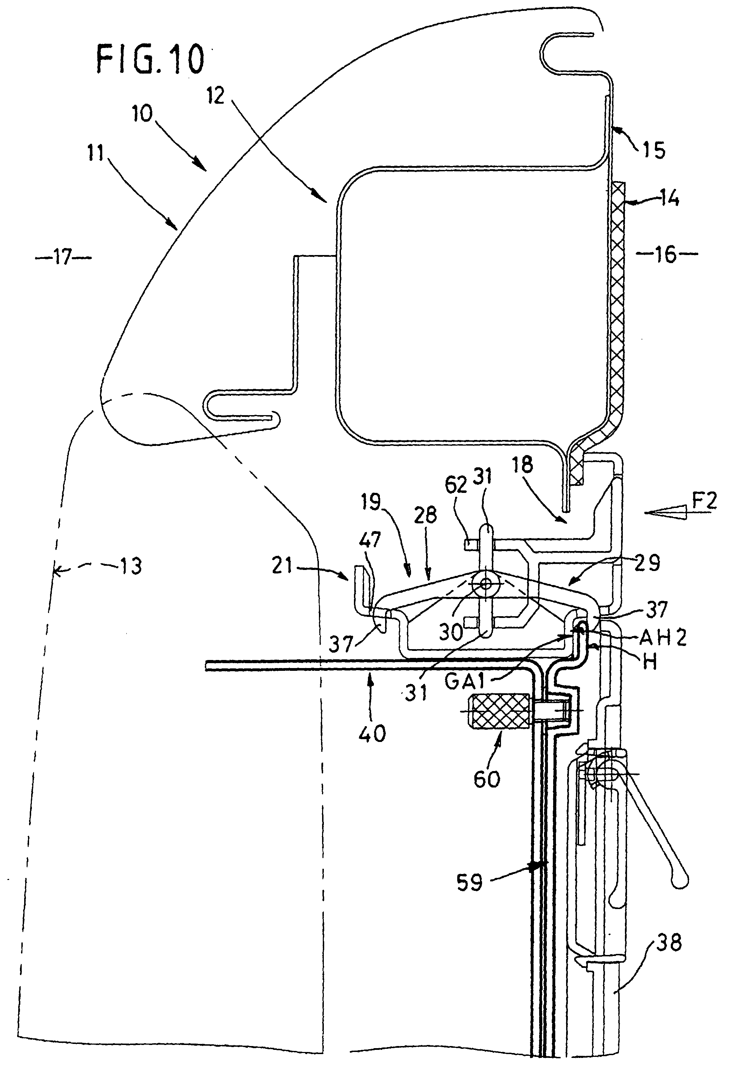

Die Anordnung nach Fig. 4 unterscheidet sich von der Darstellung gemäß Fig. 2 lediglich durch eine andere Ausführungsform der Betätigung. Und zwar sind die aus Fig. 2 ersichtlichen Betätigungshandhaben 32, 33 bei der in Fig. 4 gezeigten Ausführungsform (vgl. ebenfalls Fig. 5 und Fig. 10) in einer einheitlichen Betätigungshandhabe 39 zusammengefaßt. Die Betätigungshandhabe 39 ist über eine Gabel 62 mit beiden Hebelfortsätzen 31 der Schwenkriegel 28, 29 bewegungsgekuppelt. Und zwar gehört der nach unten weisende Hebelfortsatz 31 zum Schwenkriegel 28, während der oben weisende Hebelfortsatz 31 mit dem Schwenkriegel 29 einstückig ist.

Die Funktion bei Druckbetätigung der Betätigungshandhabe 39 in Richtung F2 ist an sich ohne weitere Erläuterungen klar. Gemäß Fig. 4 ist ein starrer Behälter 40, z.B. eine Kühlbox, mit der Gegenanlage-Haltefläche GA1 seines Halterahmens H an die rückwärtige Anlage-Haltefläche AH2 angefügt und mittels des Riegelansatzes 37 des Schwenkriegels 29 lösbar verriegelt. Der starre Behälter 40 kann demnach vom Kofferraum 16 her in den Befestigungsrahmen 19 eingesetzt werden.

Gemäß Fig. 5 ist ein starrer Behälter 40 vom Fahrgastraum 17 her in den Befestigungsrahmen 19 eingesetzt. Demnach liegt der Halterahmen H gemäß Fig. 5 mit seiner rückwärtigen Gegenanlage-Haltefläche GA2 an der vorderen Anlage-Haltefläche AH1 des Befestigungsrahmens 19 an und ist dort mittels des Riegelansatzes 37 des Schwenkriegels 28 lösbar gehalten.

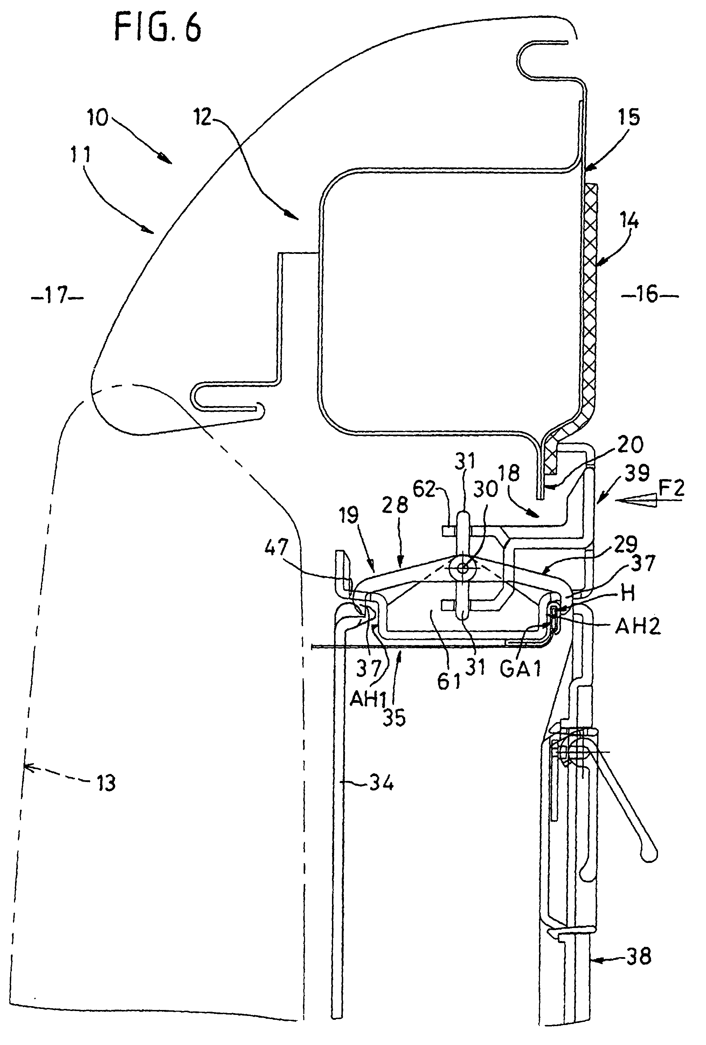

In der Ausführungsform gemäß Fig. 6 ist im Unterschied zur Darstellung gemäß Fig. 4 anstelle des Halterahmens H eines starren Behälters 40 der Halterahmen H eines textilen Skisacks 35 dargestellt, wie er auch bereits in Fig. 2 gezeigt ist.

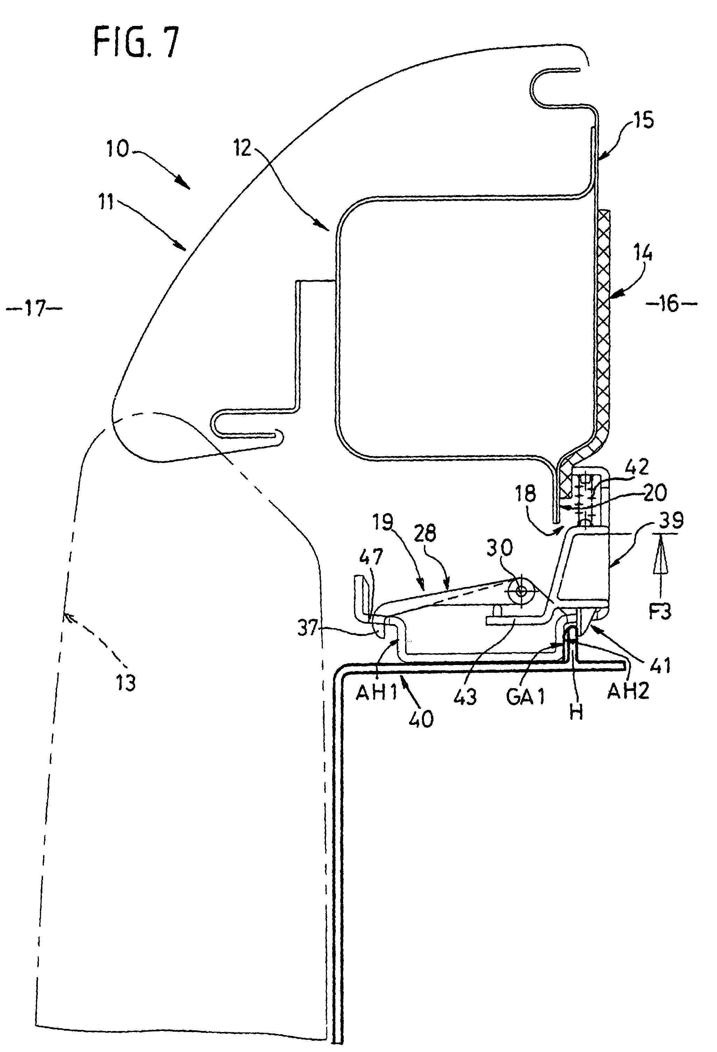

Fig. 7 entspricht in der Anwendung auf einen vom Kofferraum 16 her einsetzbaren starren Behälter 40 der Ausführungsform gemäß Fig. 4. Allerdings ist der Schwenkriegel 29 gemäß Fig. 4 durch einen Schieberiegel bzw. Vorreiber 41 ersetzt, welcher entgegen der Rückstellkraft einer Schraubendruckfeder 42 in Druckrichtung F3 translatorisch nach oben bewegt werden kann und dabei über einen Druckfinger 43 zugleich auf den Schwenkriegel 28 in seine Lösestellung versetzt.

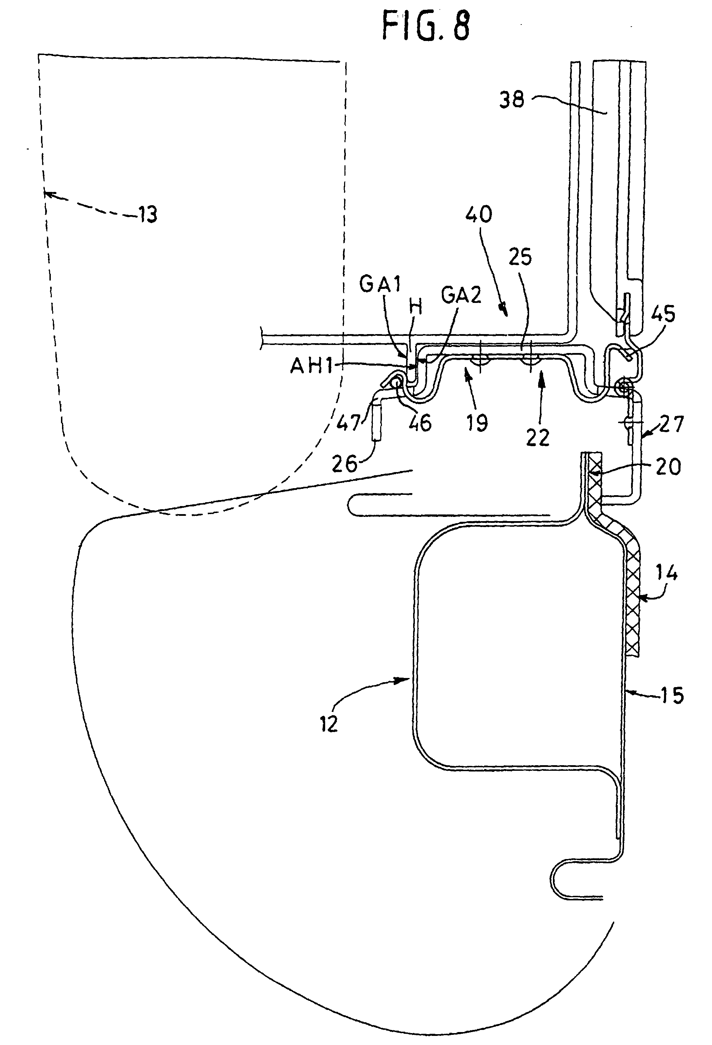

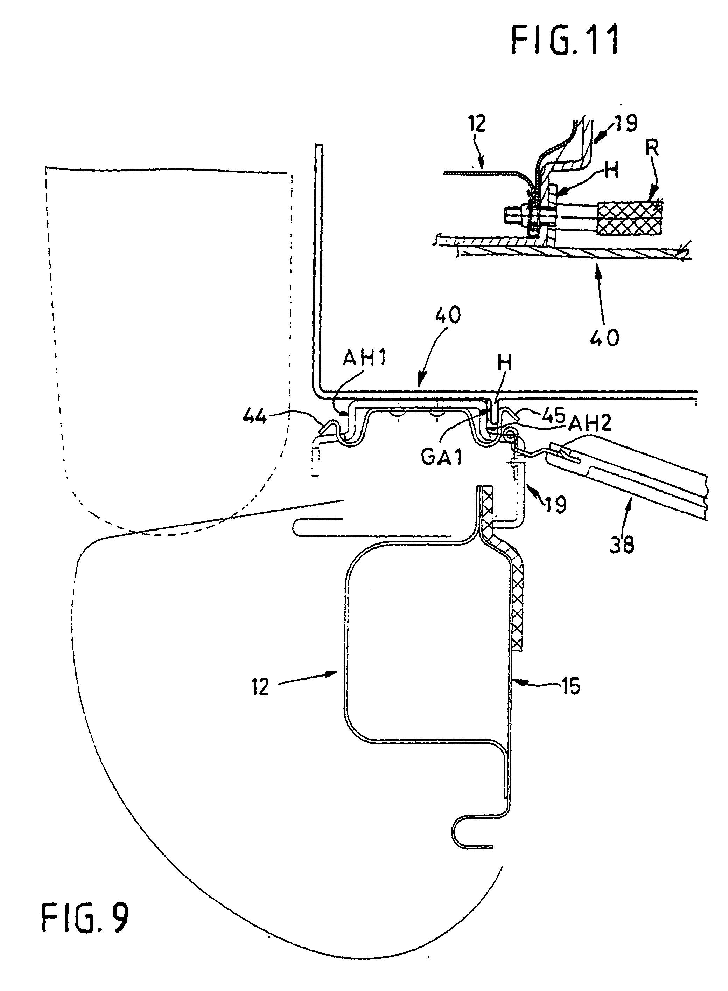

In den Fig. 8 und 9 ist in Ergänzung zu den Darstellungen der Fig. 5 und 6 die Befestigung des starren Behälters 40 mittels federnder Rastnasen 44, 45 im unteren Bereich der Anordnung gezeigt. Wie in Fig. 8 angedeutet, kann die Rastnase 44 vom Prinzip her mit einer Riegelstange 46 am Befestigungsrahmen 19 lösbar blockiert werden. Eine ähnliche Anordnung ist auch im Zusammenhang mit der federnden Rastnase 45 denkbar.

Ergänzend bleibt noch zu erwähnen, daß die Riegelansätze 37 und die Rastnasen 44, 45 die Profilstege 26, 27 der Bauteile 21, 22 in Durchbrüchen 47 durchgreifen.

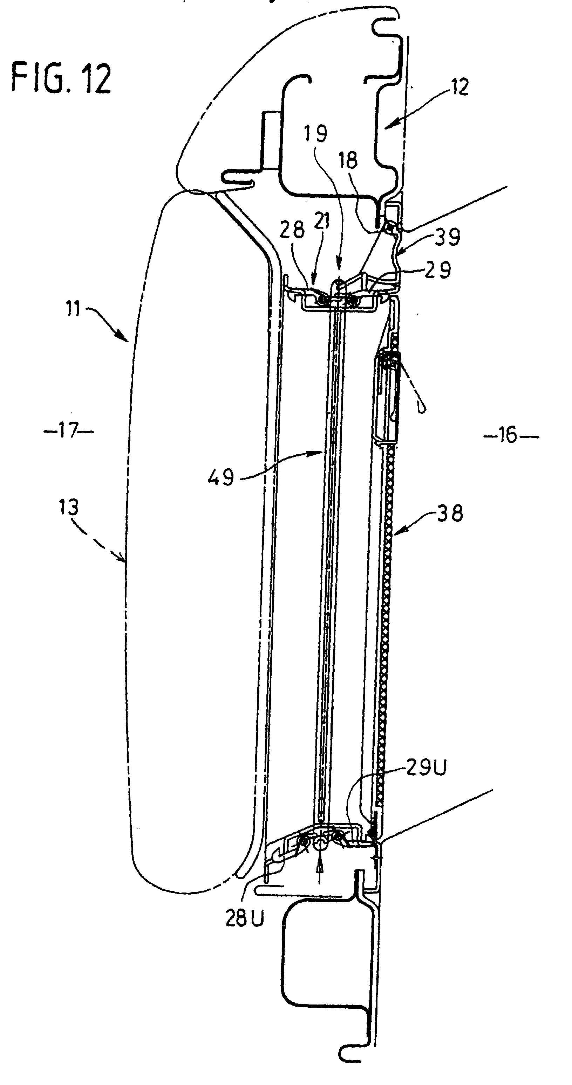

In Fig. 11 ist gezeigt, daß bei besonders schwergewichtigen Behältern 40 deren Halterahmen H mittels Rändelschrauben R sowohl am Befestigungsrahmen 19 als auch am Sitzlehnengestell 12 verankert werden kann.

In den Fig. 12 - 14 ist eine Bewegungskupplung zwischen den oberen Schwenkriegeln 28, 29 und unteren Schwenkriegeln 28U, 29U gezeigt.

Die beiden hohlprofilartigen Bauteile 21 und 22 sind mittels vertikaler Verbindungsstreben 48 zu einem geschlossen Befestigungsrahmen 19 miteinander verbunden. Außen an diesen Verbindungsstreben 48 ist eine Schubstange 49, die einen axialen Führungsschlitz 50 aufweist, an Führungsnocken 51, welche der jeweiligen Verbindungsstrebe 48 angeformt sind, translatorisch entsprechend dem mit y bezeichneten Doppelpfeil auf- und abbeweglich geführt. Wenn also die an der Achse 52 schwenkbar gelagerte Betätigungshandhabe 39 in Druckrichtung F2 betätigt wird, hintergreift die Betätigungshandhabe 39 mit einem seitlichen Vorsprung 54 einen Hebelfortsatz 53 des Schwenkriegels 29 und hebt diesen in seine Lösestellung an. Dabei drückt der Schwenkhebel 29 mit seinem Hebelfortsatz 31 zugleich auf den Hebelfortsatz 31 des Schwenkriegels 28, um diesen ebenfalls in seine Lösestellung zu versetzen. Bei dieser Bewegung hebt ein Hebefinger 55 die Schubstange 49 an deren Nocken 56 nach oben. Zugleich hebt die Schubstange 49 mit ihrem unteren Nocken 57 die beiden Hebelfortsätze 31 der unteren Schwenkriegel 28U, 29U an und betätigt diese dadurch im Lösesinne.

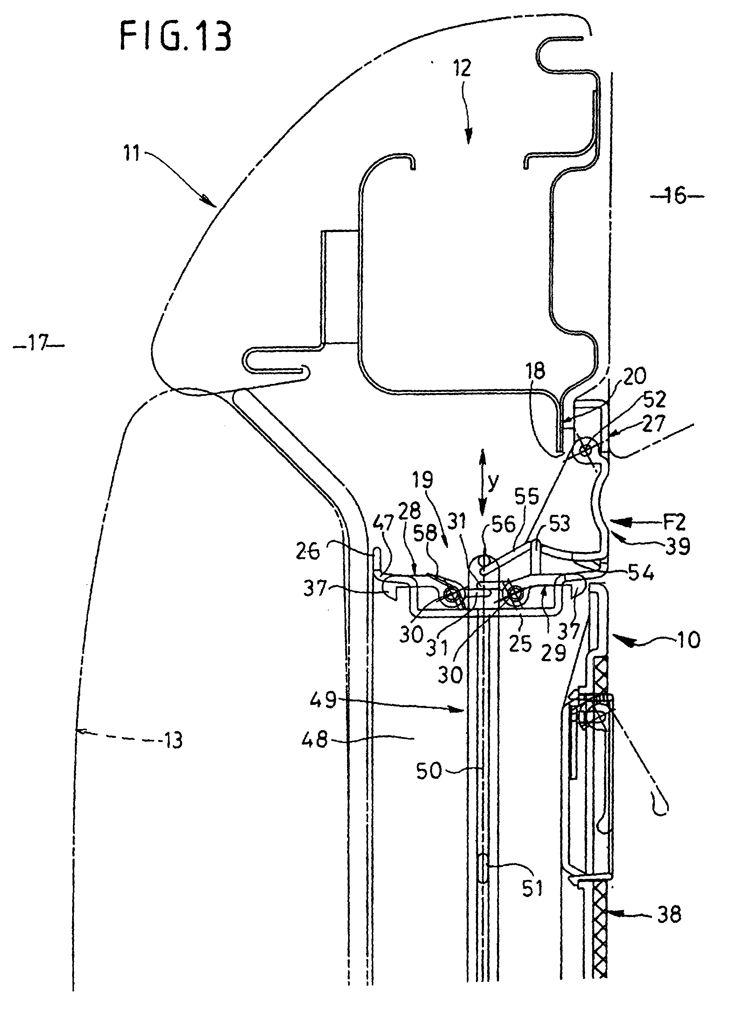

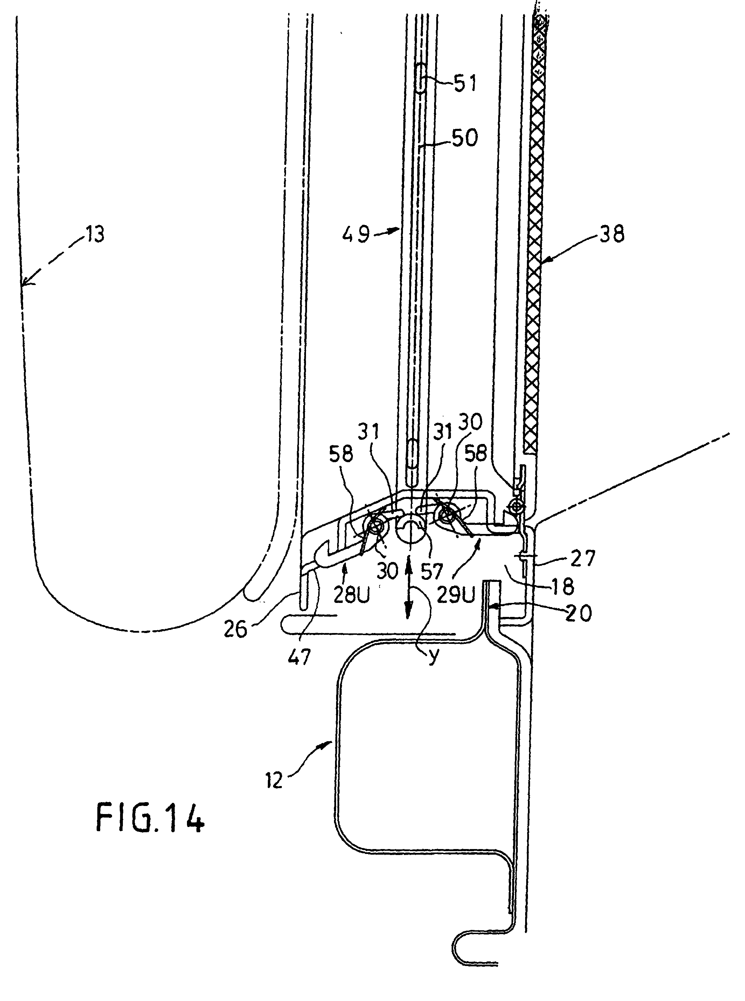

Alle Schwenkriegel 28, 29, 28U, 29U sind in Richtung ihrer Verriegelungsstellung rückstellfederbelastet, beispielsweise mittels der in den Fig. 13 und 14 dargestellten Schenkelfedern 58.

Nachzutragen ist noch, daß in Fig. 10 der Halterahmen H Bestandteil einer Adapterplatte 59 ist, an welcher wahlweise beliebige Behälter 40 angebracht werden können, beispielsweise mittels einer Rändelschraubenverbindung 60.

## Patentansprüche

1. Transportbehälter-Einrichtung (10) für den Einbau in Kraftfahrzeuge, wie z.B. Durchlade-Einrichtung, insbesondere für den sitzlehnen- oder kofferraumwandseitigen Einbau in Personenkraftwagen, mit einem am Rand (20) einer fahrzeugseitigen Durchladeöffnung (18) anzubringenden Befestigungsrahmen (19), welcher mindestens eine sich in einer Ebene erstreckende Anlage-Haltefläche (AH1, AH2) für eine Gegenanlage-Haltefläche (GA1, GA2) eines Halterahmens (H) eines Transportbehälters (35, 40), wie eines Skisacks (35) od. dgl.(40), bildet, **dadurch gekennzeichnet, daß** der Befestigungsrahmen (19) zwei im Abstand voneinander angeordnete, in einander entgegengesetzte Richtungen (bei 17, bei 16) weisende Anlage-Halteflächen (AH1, AH2), nämlich eine erste (AH1) und eine zweite (AH2) Anlage-Haltefläche, bildet, an welche jeweils oder alternativ eine Gegenanlage-Haltefläche (GA1, GA2) eines Halterahmens (H) anlegbar ist, und daß zur lösbaren Festlegung des Halterahmens (H) an der jeweiligen Anlage-Haltefläche (AH1, AH2) jeder Anlage-Haltefläche (AH1, AH2) mindestens ein Riegel (28, 29; 28U, 29U; 41) zugeordnet ist.

2. Transportbehälter-Einrichtung nach Anspruch 1, **dadurch gekennzeichnet, daß** der Befestigungsrahmen (19) mindestens zwei im Parallelabstand voneinander angeordnete hohlprofilartige Bauteile (21, 22) aufweist, deren Querschnittsprofil im wesentlichen U-förmig ist und deren durch einen Profilboden (25) miteinander verbundene Profilstege (26, 27) mit ihren Außenflächen die erste (AH1) und die zweite (AH2) Anlage-Haltefläche bilden.

3. Transportbehälter-Einrichtung nach Anspruch 2, **dadurch gekennzeichnet, daß** die Profilöffnung (23, 24) des jeweiligen hohlprofilartigen Bauteils (21, 22) nach außen weist.

4. Transportbehälter-Einrichtung nach einem der Ansprüche 1 bis 3, **dadurch gekennzeichnet, daß** die beiden hohlprofilartigen Bauteile (21, 22) durch zwei sich jeweils rechtwinklig zu ihnen erstreckende Verbindungsstreben (48) zu einem geschlossenen Befestigungsrahmen (19) miteinander verbunden sind.

5. Transportbehälter-Einrichtung nach einem der Ansprüche 1 bis 4, **dadurch gekennzeichnet, daß** die beiden hohlprofilartigen Bauteile (21, 22) fahrzeugseitig im wesentlichen horizontal angebracht sind.

6. Transportbehälter-Einrichtung nach einem der Ansprüche 1 bis 5, **dadurch gekennzeichnet, daß** der Riegel (28, 29; 28U, 29U; 41) mittels mindestens einer Betätigungshandhabe (32, 33, 39) zu betätigen ist.

7. Transportbehälter-Einrichtung nach einem der Ansprüche 1 bis 6, **dadurch gekennzeichnet, daß** der Riegel ein Schwenkriegel (28, 29; 28U, 29U) oder ein Schieberiegel (41) ist, welcher den an der Anlage-Haltefläche (z.B. AH2) anliegenden Halterahmen (H) an einer Stelle (GA2) hintergreift, die der Gegenanlage-Haltefläche (GA1) des Halterahmens (H) abgewandt ist.

8. Transportbehälter-Einrichtung nach einem der Ansprüche 1 bis 7, **dadurch gekennzeichnet, daß** der Riegel von einer federnden Rastnase (44, 45) gebildet ist.

9. Transportbehälter-Einrichtung nach Anspruch 8, **dadurch gekennzeichnet, daß** die federnde Rastnase (44, 45) von einem Blattfederelement gebildet ist.

10. Transportbehälter-Einrichtung nach Anspruch 8 oder nach Anspruch 9, **dadurch gekennzeichnet, daß** die Rastnase (44, 45) in ihrer den Halterahmen (H) hintergreifenden Sperrstellung lösbar (bei 46) zu blockieren ist.

11. Transportbehälter-Einrichtung nach einem der Ansprüche 1 bis 10, **dadurch gekennzeichnet, daß** jedem Riegel (28, 29) eine Betätigungshandhabe (32, 33) zugeordnet ist.

12. Transportbehälter-Einrichtung nach einem der Ansprüche 1 bis 11, **dadurch gekennzeichnet, daß** die Betätigungshandhabe (32, 33) für den jeweiligen Riegel (28, 29) auf der Seite angeordnet ist, auf welcher sich auch die dem Riegel (28, 29) zugeordnete Anlage-Haltefläche (AH1, AH2) des Befestigungsrahmens (19) befindet.

13. Transportbehälter-Einrichtung nach einem der Ansprüche 1 bis 11, **dadurch gekennzeichnet, daß** die Betätigungshandhaben für beide Riegel auf derselben Seite des Befestigungsrahmens vorgesehen sind.

14. Transportbehälter-Einrichtung nach Anspruch 13, **dadurch gekennzeichnet, daß** beide Betätigungshandhaben zu einer einzigen beide Riegel (28, 29) zugleich bedienenden Betätigungshandhabe (39) zusammengefaßt sind.

15. Transportbehälter-Einrichtung nach einem der Ansprüche 1 bis 14, **dadurch gekennzeichnet, daß** an einer Seite des Befestigungsrahmens (19), z.B. oben (bei 21), mindestens ein Riegel (28, 29) angeordnet ist, während an der dem Riegel diametral gegenüberliegenden Seite der Befestigungsanordnung, z.B. unten (bei 22), nur eine den Halterahmen (H) an dem Befestigungsrahmen (19) haltende Formschlußaufnahme vorgesehen ist.

16. Transportbehälter-Einrichtung nach einem der Ansprüche 1 bis 14, **dadurch gekennzeichnet, daß** an einer Seite der Befestigungsanordnung (19), z.B. oben (bei 21), mindestens ein Riegel (28, 29) angeordnet ist, und daß an der gegenüberliegenden Seite des Befestigungsrahmens (19), z.B. unten (bei 22), ebenfalls mindestens ein Riegel (28U, 29U) angeordnet ist, daß an einer Seite der Befestigungsanordnung, z.B. oben (bei 21), mindestens eine Betätigungshandhabe (39) für mindestens einen Riegel (28, 29) angeordnet ist und daß die an den diametral gegenüberliegenden Seiten (z.B. bei 22) des Befestigungsrahmens (19) vorgesehenen Riegel (28U, 29U) miteinander bewegungsgekuppelt sind.

## Claims

1. Transport container apparatus (10) for installation in motor vehicles, such as for example a load-through apparatus, particularly for installation in the seat backrest wall or boot wall in motor cars, the said apparatus having a fastening frame (19) which is to be fitted to the rim (20) of a load-through aperture (18) in the vehicle and which forms at least one abutment/holding face (AH1, AH2) extending in one plane for a counter-abutment/holding face (GA1, GA2) on a holding frame (H) belonging to a transport container (35, 40), such as a ski bag (35) or the like (40), **characterised in that** the fastening frame (19) forms two abutment/holding faces (AH1, AH2) which are disposed at a distance from one another and point in opposite directions (at 17, at 16), namely a first (AH1) and a second (AH2) abutment/holding face against which, either in each case or alternatively, a counter-abutment/holding face (GA1, GA2) of a holding frame (H) can be laid, and that at least one bolt (28, 29; 28U, 29U; 41) is associated with each abutment/holding face (AH1, AH2) for the purpose of securing the said holding frame (H) in position on the particular abutment/holding face (AH1, AH2) in a releasable manner.

2. Transport container apparatus according to claim 1, **characterised in that** the fastening frame (19) has at least two hollow-profile-like components (21, 22) which are disposed at a parallel distance from one another, whose cross-sectional profile is substantially U-shaped and whose profile webs (26, 27), which are connected to one another by a profile base (25), form the first (AH1) and the second (AH2) abutment/holding face with their outer faces.

3. Transport container apparatus according to claim 2, **characterised in that** the profile aperture (23, 24) of the particular hollow-profile-like component (21, 22) points outwards.

4. Transport container apparatus according to one of claims 1 to 3, **characterised in that** the two hollow-profile-like components (21, 22) are connected to one another, by two connecting struts (48) extending at right angles to the said two components in each case, to form a closed fastening frame (19).

5. Transport container apparatus according to one of claims 1 to 4, **characterised in that** the two hollow-profile-like components (21, 22) are fitted substantially horizontally in the vehicle.

6. Transport container apparatus according to one of claims 1 to 5, **characterised in that** the bolt (28, 29; 28U, 29U, ; 41) can be actuated by means of at least one actuating handle (32, 33, 39).

7. Transport container apparatus according to one of claims 1 to 6, **characterised in that** the bolt is a pivoting bolt (28, 29; 28U, 29U) or sliding bolt (41) which engages behind the holding frame (H) resting against the abutment/holding face (for example AH2), at a point (GA2) which is averted from the counter-abutment/holding face (GA1) of the said holding frame (H).

8. Transport container apparatus according to one of claims 1 to 7, **characterised in that** the bolt is formed by a resilient latching nose (44, 45).

9. Transport container apparatus according to claim 8, **characterised in that** the resilient latching nose (44, 45) is formed by a leaf spring element.

10. Transport container apparatus according to claim 8 or 9, **characterised in that** the latching nose (44, 45) can be clamped in a releasable manner (at 46) in its blocking position which engages behind the holding frame (H).

11. Transport container apparatus according to one of claims 1 to 10, **characterised in that** an actuating handle (32, 33) is associated with each bolt (28, 29).

12. Transport container apparatus according to one of claims 1 to 11, **characterised in that** the actuating handle (32, 33) for the particular bolt (28, 29) is disposed on the side on which that abutment/holding face (AH1, AH2) of the fastening frame (19) which is associated with the said bolt (28, 29) is also located.

13. Transport container apparatus according to one of claims 1 to 11, **characterised in that** the actuating handles for both bolts are provided on the same side of the fastening frame.

14. Transport container apparatus according to claim 13, **characterised in that** both actuating handles are combined to form a single actuating handle (39) which operates both bolts (28, 29) at the same time.

15. Transport container apparatus according to one of claims 1 to 14, **characterised in that** at least one bolt (28, 29) is disposed on one side of the fastening frame (19), for example at the top (at 21), while only one form-locking receptacle, which holds the holding frame (H) on the fastening frame (19), is provided on that side of the fastening arrangement which is diametrically opposite the bolt, for example at the bottom (at 22).

16. Transport container apparatus according to one of claims 1 to 14, **characterised in that** at least one bolt (28, 29) is disposed on one side of the fastening arrangement (19), for example at the top (at 21), and that at least one bolt (28U, 29U) is likewise disposed on the opposite side of the fastening frame (19), for example at the bottom (at 22), that at least one actuating handle (39) for at least one bolt (28, 29) is disposed on one side of the fastening arrangement, for example at the top (at 21), and that the bolts (28U, 29U) provided on the diametrically opposite sides (for example at 22) of the fastening frame (19) are kinetically coupled to one another.

## Revendications

1. Agencement de coffre (10) destiné à être monté dans des véhicules automobiles, par exemple dispositif de chargement traversant, en particulier pour le montage côté dossier de siège et paroi de coffre à bagages dans des voitures particulières, avec un cadre de fixation (19) à monter sur le bord (20) d'une ouverture de chargement traversant (18) située côté véhicule, cadre de fixation qui forme au moins une face de maintien en appui (AH1, AH2) s'étendant dans un plan, pour une face de maintien d'appui conjugué (GA1, GA2) d'un cadre de maintien (H) d'un coffre (35, 40), tel qu'un sac à skis (35) ou analogue (40), **caractérisé en ce que** le cadre de fixation (19) forme deux faces de maintien en appui (AH1, AH2), disposées à distance l'une de l'autre, tournées dans des directions (en 17, en 16) mutuellement opposées, précisément une première face de maintien en appui (AH1) et une deuxième face de maintien en appui (AH2) sur chacune desquelles, ou en alternance, peut être appliquée une face de maintien en appui conjuguée (GA1, GA2) d'un cadre de maintien (H), et **en ce que**, pour obtenir une fixation désolidarisable du cadre de maintien (H) sur la face de maintien en appui (AH1, AH2) respective, à chaque face de maintien en appui (AH1, AH2) est associé au moins un verrou (28, 29 ; 28U, 29U ; 41).

2. Agencement de coffre selon la revendication 1, **caractérisé en ce que** le cadre de fixation (19) présente au moins deux composants (21, 22) du genre d'un profilé creux, disposés à distance et parallèlement l'un à l'autre, dont le profil de section transversale est sensiblement en forme de U et dont les nervures de profil (26, 27), reliées ensemble par un fond de profil (25), forment, par leurs faces extérieures, le première face de maintien en appui (AH1) et la deuxième face de maintien en appui (AH2).

3. Agencement de coffre selon la revendication 2, **caractérisé en ce que** l'ouverture de profilé (23, 24) du composant (21, 22) du genre d'un profilé creux respectif est tourné vers l'extérieur.

4. Agencement de coffre selon l'une des revendications 1 à 3, **caractérisé en ce que** les deux composants (21, 22) du genre d'un profilé creux sont reliés ensemble par deux entretoises de liaison (48) s'étendant chacune à angle droit de ceux-ci, pour former un cadre de fixation (19) fermé.

5. Agencement de coffre selon l'une des revendications 1 à 4, **caractérisé en ce que** les deux composants (21, 22) du genre de profilés creux sont montés sensiblement horizontalement côté véhicule.

6. Agencement de coffre selon l'une des revendications 1 à 5, **caractérisé en ce que** le verrou (28, 29; 28U, 29U; 41) est actionné à l'aide d'au moins une manette d'actionnement (32, 33, 39).

7. Agencement de coffre selon l'une des revendications 1 à 6, **caractérisé en ce que** le verrou est un verrou pivotant (28, 29; 28U, 29U) ou un verrou coulissant (41) qui saisit par l'arrière le cadre de maintien (H) en appui sur la face de maintien en appui (par exemple AH2) en un emplacement (GA2) opposé à la face de maintien en appui conjuguée (GA1) du cadre de maintien (H).

8. Agencement de coffre selon l'une des revendications 1 à 7, **caractérisé en ce que** le verrou est formé par un ergot d'encliquetage (44, 45) élastique.

9. Agencement de coffre selon la revendication 8, **caractérisé en ce que** l'ergot d'encliquetage (44, 45) élastique est formé par un élément de ressort à lame.

10. Agencement de coffre selon la revendication 8 ou la revendication 9, **caractérisé en ce que** l'ergot d'encliquetage (44, 45) est à bloquer de façon désolidarisable (en 46) à sa position de blocage à saisie par l'arrière du cadre de maintien (H).

11. Agencement de coffre selon l'une des revendications 1 à 10, **caractérisé en ce qu'**une manette d'actionnement (32, 33) est associée à chaque verrou (28, 29).

12. Agencement de coffre selon l'une des revendications 1 à 11, **caractérisé en ce que** la manette d'actionnement (32, 33), prévue pour le verrou (28, 29) respectif, est disposée du côté sur lequel se trouve la face de maintien en appui (AH1, AH2), associée au verrou (28, 29), du cadre de fixation (19).

13. Agencement de coffre selon l'une des revendications 1 à 11, **caractérisé en ce que** les manettes d'actionnement pour les deux verrous sont prévues sur le même côté du cadre de fixation.

14. Agencement de coffre selon la revendication 13, **caractérisé en ce que** les deux manettes d'actionnement sont regroupées en une manette d'actionnement (39) unique, desservant en même temps les deux verrous (28, 29).

15. Agencement de coffre selon l'une des revendications 1 à 14, **caractérisé en ce que**, sur un côté du cadre de fixation 19, par exemple en partie haute (en 21), est disposé au moins un verrou (28, 29), tandis que, sur le côté, diamétralement opposé au verrou, du dispositif de fixation, par exemple en partie basse (en 22) n'est prévu qu'un logement à ajustement de forme, assurant le maintien du cadre de maintien (H) sur le cadre de fixation (19).

16. Agencement de coffre selon l'une des revendications 1 à 14, **caractérisé en ce que**, sur un côté du dispositif de fixation (19), par exemple en partie haute (en 21), est disposé au moins un verrou (28,29), et **en ce que** sur le côté opposé du cadre de fixation (19), par exemple en partie basse (en 22), est également disposé au moins un verrou (28U, 29U), **en ce que**, sur un côté du dispositif de fixation, par exemple en partie haute (en 21), est disposée au moins une manette d'actionnement (39) pour au moins un verrou (28, 29), et **en ce que** les verrous (28U, 29U), prévus sur les côtés diamétralement opposés (par exemple en 22) du cadre de fixation (19), sont couplés cinématiquement ensemble.
